# EUROPEAN PATENT SPECIFICATION

(11) **EP 2 404 784 B1**
(45) Date of publication and mention of the grant of the patent: **21.05.2014**
(21) Application number: 10252096.2
(22) Date of filing: 10.12.2010
(51) Int. Cl.: B60R 11/02, B60N 2/48, G06F 1/16, H01R 9/24

(54) **Vehicle-mounted electronic product with magnetic connector and its mounting bracket**
Fahrzeugmontiertes elektronisches Produkt mit magnetischem Verbinder und Befestigungsteil
Produit électronique embarqué sur véhicule avec connecteur magnétique et son support de montage

(30) Priority: 01.07.2010 CN 201020253247 U
(43) Date of publication of application: 11.01.2012
(73) Proprietor: Apollo Electronics Group Ltd., Kowloon Bay, Hong Kong (CN)
(72) Inventor: Hsiung, Chen Kuo, Kowloon Bay, Hong Kong (CN)
(74) Representative: Piésold, Alexander James

(56) References cited:
- WO-A1-01/15285
- GB-A- 2 448 958
- US-A- 5 344 330
- US-A- 5 478 250
- US-A1- 2003 227 764
- US-A1- 2008 232 061

## Description

This invention relates to a portable vehicle-mouted electronic product and its mounting bracket, particularly a vehicle-mouted electronic product with magnetic connector and its mounting bracket.

It is getting more popular for vehicle users to install varieties of electronic products such as DVD players and multimedia players in their own cars. Usually these electronic products are mounted on the seatbacks of the front seats to enable the rear passengers to enjoy entertainment while the cars are moving.

For instance, a Chinese Utility Model No. CN 2777708Y as approved and published on 3 May 2006 and a GB Patent Application, Publication No. 2448958 (closest prior art), disclose a mounting bracket for portable visual electronic product. After installation of the mounting bracket onto a car seat (headrest), an electronic product could be secured to the fixing base on the other end of the mounting bracket. Another Chinese Utility Model No. CN 2816989Y as approved and published on 13 September 2006 discloses a fixing base for portable visual electronic product which could fix a portable visual electronic product to different location in an automobile vehicle such as headrest support rod or to sun visor.

Nowadays, the connection between mounting brackets and electronic products (such as car DVD player, iPad, iPhone) is usually through connectors, and the power, audio, video and other signals are transmitted through the corresponding ports of the connectors. However, as the connector ports are usually fixed and immovable, they often lead to problems like unstable signal transmission and susceptibility to damages in service. For example, the pictures and sounds on the DVD player carried by a moving car are often affected by bumps on the road. In some cases the DVD player may even come to a halt or restart by itself. This will not only affect the performance of the DVD player but also increase the chances of damage. Therefore most car DVD players have become something like ornaments and caused inconveniences during use. Given the above situation, it is very important to find a solution to the connector stability problem.

It is an object of the present invention to provide a vehicle-mounted electronic product with magnetic connector and its mounting bracket enabling a more stable electric signal transmission between the mounting bracket and the vehicle-mounted electronic product.

Aspects of the the present invention are defined by the appended claims.

In the following embodiment, there is disclosed a vehicle-mountable electronic product comprising an electronic product body having a first port of a connector, the first port being for electric signal transmission while the vehicle is moving, and the first port comprising a primary body shell having a plurality of first signal pins installed in the primary body shell, characterised in that the primary body shell of the first port comprises a plurality of magnets arranged so that, in use, when the first port is connected to a second port for electric signal transmission, the first and second ports are held together by the plurality of magnets.

In embodiments the first signal pins may have a built-in spring, and the pin heads reach out under the effect of built-in spring and stick out of the pin holes of the primary body shell. The tail ends may be connected to the signal wires installed inside the product and used to transmit electric signals. The length of each of said first signal pin heads reaching out from the primary body shell may be different, thus enabling receipt of electric signal from the second port of the magnetic connector according to a sequence determined by the different lengths of the pin heads.

There may be a slot on the back of the electronic product body. The slot may be for receiving a connecting block of a mounting bracket (described below). The first port is preferably installed within the slot.

The present invention provides apparatus comprising: a vehicle-mountable electronic product comprising an electronic product body having a first port of a connector, the first port comprising a primary body shell having a plurality of first signal pins installed in the primary body shell; and a mounting bracket for mounting the vehicle-mounted electronic product in place in a vehicle, the mounting bracket comprising a bracket body having a second port of the connector, the second port comprising a secondary body shell having a plurality of second signal pins installed in the secondary body shell, and and the second port being configured to fit together with the first port, wherein the connector is for electric signal transmission between the vehicle-mountable electronic product and the mounting bracket while the vehicle is moving; characterised in that the connector is a magnetic connector, wherein the primary body shell of the first port comprises a plurality of magnets and the secondary body shell of the second port comprises a plurality of magnets, the plurality of magnets of the first port and the plurality of magnets of the second port being arranged so that, in use, when the second port is connected to the first port for electric signal transmission, the second and first ports are held together by the plurality of magnets; and in that the second port is floatably mounted to the bracket body so that, in use, the second port follows movement of the first port.

Said bracket body preferably comprises a transversal fixed rod installed between the car headrest and seatback, a longitudinal expansion rod connected to the middle of the transversal fixed rod, and a mounting base connected to one end of the longitudinal expansion rod. A connecting block may be placed on said mounting base. Said second port may be mounted on the connecting block. A tact switch capable of triggering the connecting block to bounce up may also be placed on said mounting base.

The vehicle-mounted electronic product and mounting bracket including the magnetic connector of the present invention is superior to the existing technologies in the following respects: (1) Said vehicle-mounted electronic product and the mounting bracket are fit together by the magnetic force between the first port and the second port. The second port is floatable and can follow the movements of the first port in order to ensure close contact between the first signal pins and the second signal pins, prevent relative slip, improve the stability of signal transmission, and free the device of the impact of external bumps. (2) Said magnetic connector has a simple and practical structure which applies to all kinds of port connection that need data transmission or have other connection requirements. (3) This invention achieves good contact between the ports without any pressure applied. The magnets in the connector serve as an orienting mechanism which makes the connector easier and more convenient to use.

A preferred embodiment of the present invention will now be described by way of example only, with reference to the accompanying drawings, in which:
Figure 1 shows a structure view of the mounting bracket of an embodiment of the present invention;
Figure 2 shows a side structure view of the mounting bracket of the embodiment of the present invention shown in Figure 1;
Figure 3 shows the separated structure of the mounting bracket of the embodiment of the present invention shown in Figures 1 and 2;
Figure 4 shows the enlarged diagram of the second port of the mounting bracket of the embodiment of the present invention shown in Figures 1-3;
Figure 5 shows the enlarged diagram of the first port of a vehicle-mounted electronic product of an embodiment of the present invention configured to couple with the mounting bracket shown in Figures 1-4;
Figure 6 shows an exploded view of the structure of the magnetic connector of the embodiment of the present invention shown in Figures 1-6;
Figure 7 shows the structure of the magnetic connector of the embodiment of the present invention shown in Figures 1-6;
Figure 8 shows the assembly process of the vehicle-mounted electronic product and the mounting bracket of the embodiment of the present invention shown in Figures 1-7;
Figure 9 shows the structure of the vehicle-mounted electronic product and the mounting bracket of the embodiment of the present invention shown in Figures 1-7 after the assembly is completed.

The present invention will be exemplified and illustrated in more detail below using an embodiment of a car DVD player as an example. Of course, other implementations are possible and are within the scope of the present invention.

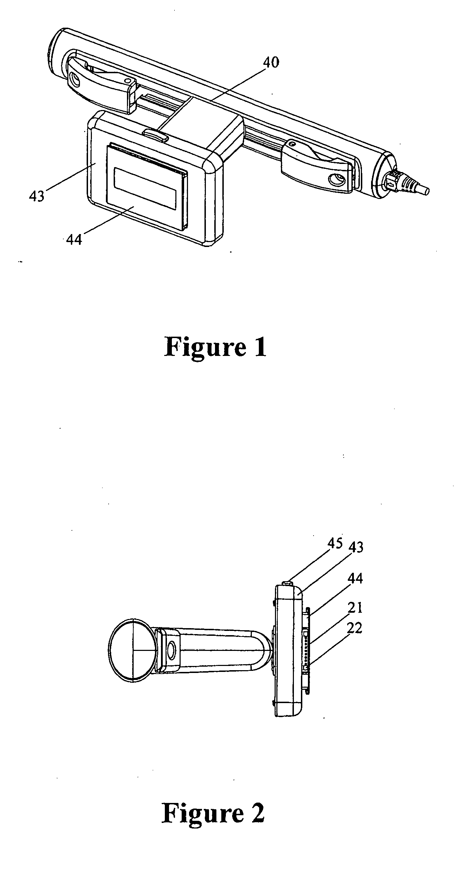

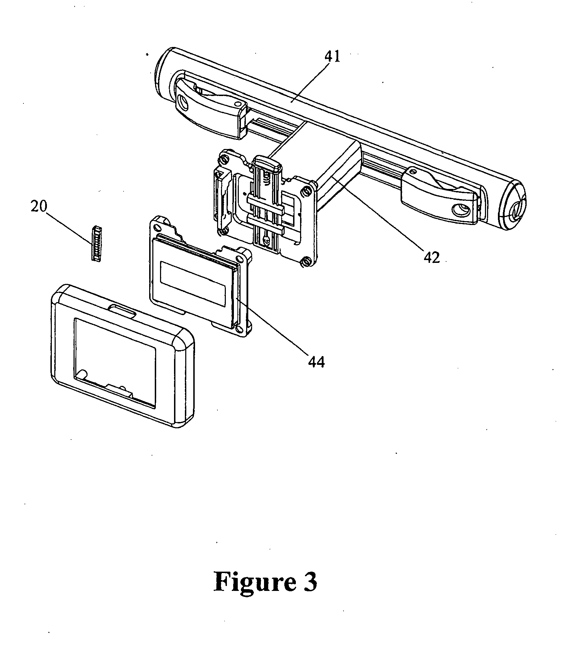

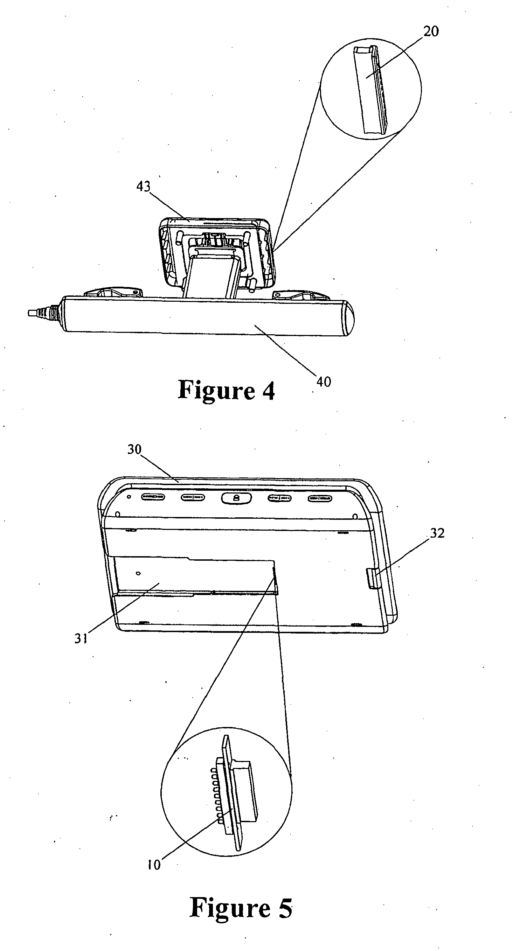

The present invention relates a vehicle-mounted electronic product with magnetic connector and its mounting bracket. The said vehicle-mounted electronic product and its mounting bracket are connected through magnetic connector. As shown in Figures 1 to 4, the mounting bracket of said vehicle-mounted electronic product comprises a bracket body 40. The bracket body comprises a transversal fixed rod 41 installed between the headrest and backrest of the car seat, a longitudinal expansion rod 42 connected to the middle of the transversal fixed rod, and a mounting base 43 connected to one end of the longitudinal expansion rod. A connecting block 44 is placed on said mounting base. A second port 20 of the magnetic connector is mounted on the connecting block (as shown in Fig.4). In addition a tact switch 45 switch capable of triggering the connecting block 44 to bounce up is also placed on said mounting base 43. As shown in Fig.5, said vehicle-mounted electronic product (e.g. a car DVD player) comprises the electronic product body 30. A slot 31 is placed on the back of the electronic product body. The first port 10 of the magnetic connector is placed inside the slot 31. In addition, a release switch 32 is also placed on one side of the electronic product body 30. When this release switch is pressed, the bracket body 40 can be unlocked from the electronic product body 30.

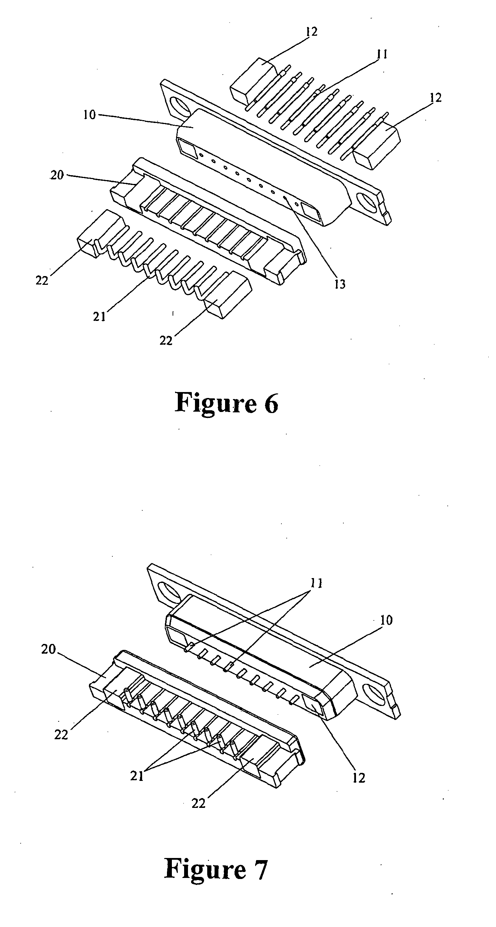

As shown in Fig.6 and Fig.7, the magnetic connector of this invention comprises a first port (commonly known as male port) and a second port (commonly known as female port) wherein: said first port comprises a primary body shell 10 which is fixed to the corresponding device (e.g. a car DVD player) and further comprises two or more magnets 12 and several first signal pins 11 (also known as male signal pins) mounted on the primary body shell 10. Said first signal pins are installed on the primary body shell 10 and each of them has a head and a tail. The heads reach out under the effect of a built-in spring (not shown on the diagram) and stick out of the pin holes 13 in the primary body shell. They are used for connection with second signal pins 21 of the second port. Their tail ends are connected to the signal wires installed inside the device and used to transmit power, audio, video, testing, control, and other electric signals. The distance by which the heads of said first signal pins 11 stick out varies with their functions, so that different electric signals are accessed according to a sequence determined by the different lengths of their heads when they are connected to the second signal pins. Said second port comprises a secondary body shell 20 and two or more magnets 22 and several second signal pins 21 (also known as female signal pins) fixed onto the secondary body shell. The heads of the second signal pins 21 point at the corresponding first signal pins 11. Their L-shaped tails are connected to the signal wires installed inside the device and are used to transmit power, audio, video, testing, control, and other electric signals. The second port is installed on a corresponding device (e.g. mounting bracket of the car DVD player) with a motion clearance allowed between the port and the mounting position of the device. Furthermore, magnets 12 and 22 of the first port and the second port are of different polarities so that they can be drawn to each other.

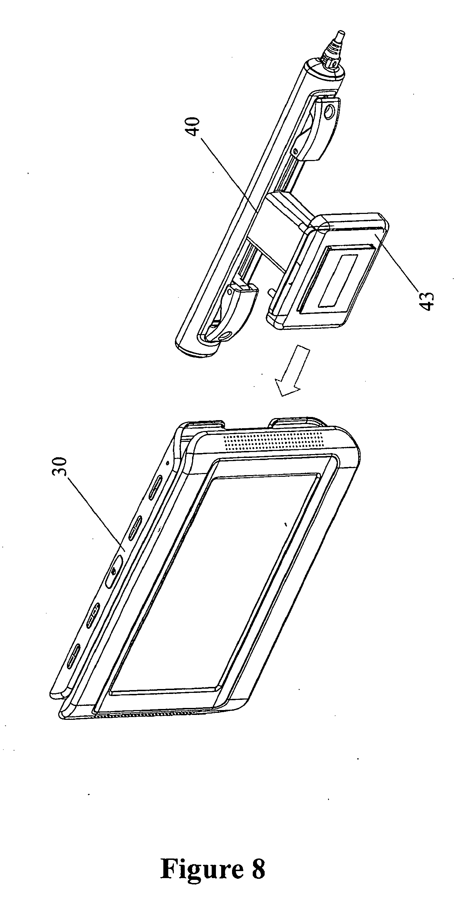

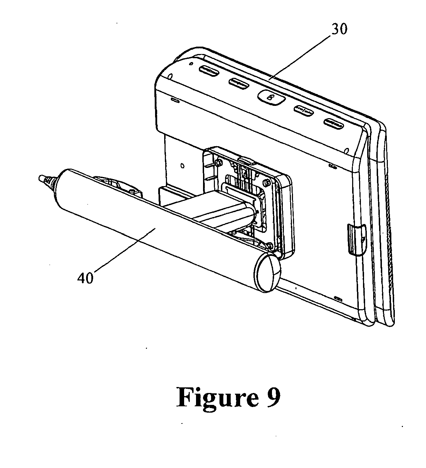

As indicated in Fig.8, press the tact switch 45 on the mounting bracket so that the connecting block 44 bounces up onto the mounting base 43 before use. Then slide the connecting block 44 into the slot 31 on the back of the vehicle-mounted electronic product so that the first port and the second port of the magnetic connector are fit together under the effect of the opposite poles of magnets 12 and 22. The second signal pins 21 and the first signal pins 11 are firmly pressed together. The elastic force on the first signal pins 11 and the pressure on the second signal pins constitute a couple of forces which ensures good contact between signal pins. As second port has certain floatability and can move with the first port, the force between the first signal pins and the second signal pins is mainly in the vertical direction. Therefore they do not have relative sliding motion and as a result, the connection is more reliable and stable and the signal transmission is steadier and free of the impact of external bumps. Fig.9 is a schematic view of the overall structure of an assembled vehicle-mounted electronic product (DVD player) and its mounting bracket.

This invention could also apply on a variety of data and signal transmission port, such as those ports for DVD, iPad, iPhone. Through the floatable port, a more reliable and steadier signal transmission could be achieved.

## Claims

1. Apparatus comprising:
a vehicle-mountable electronic product comprising an electronic product body (30) having a first port of a connector, the first port comprising a primary body shell (10) having a plurality of first signal pins (11) installed in the primary body shell (10); and
a mounting bracket for mounting the vehicle-mounted electronic product in place in a vehicle, the mounting bracket comprising a bracket body (40) having a second port (20) of the connector, the second port comprising a secondary body shell (20) having a plurality of second signal pins (21) installed in the secondary body shell (20), and the second port being configured to fit together with the first port,
wherein the connector is for electric signal transmission between the vehicle-mountable electronic product and the mounting bracket while the vehicle is moving;
**characterised in that** the connector is a magnetic connector, wherein the primary body shell (10) of the first port comprises a plurality of magnets (12) and the secondary body shell (20) of the second port comprises a plurality of magnets (22), the plurality of magnets (12) of the first port and the plurality of magnets (22) of the second port being arranged so that, in use, when the second port is connected to the first port for electric signal transmission, the second and first ports are held together by the plurality of magnets (22); and
**in that** the second port (20) is floatably mounted to the bracket body (40) so that, in use, the second port (20) follows movement of the first port.

2. Apparatus as claimed in claim 1, wherein the plurality of second signal pins (21) are fixed to the secondary body shell (20) such that their pin heads point, in use, at a corresponding plurality of first signal pins (11) of the first port, and
wherein the tail ends of the second signal pins (21) are connected to signal wires installed inside the mounting bracket.

3. Apparatus as claimed in claim 1 or 2, wherein the bracket body (40) comprises:
a transversal fixed rod (41) for installation between the headrest and backrest of a car seat;
a longitudinal expansion rod (42) connected to the middle of the transversal fixed rod (41); and
a mounting base (43) connected to one end of the longitudinal expansion rod (42),
wherein a connecting block (44) is provided on the mounting base (43) and the second port (20) is mounted on the connecting block (44).

4. Apparatus as claimed in claim 3, wherein the mounting bracket further comprises a tact switch (45) provided on the mounting base (43) arranged to cause the connecting block (44) to protrude from the mounting base (43).

5. Apparatus as claimed in any preceding claim, wherein the mounting bracket is fixed between the headrest and backrest of a car seat.

6. Apparatus as claimed in any preceding claim, wherein the connector ports are configured such that when the plurality of first signal pins (11) have electrical contact with the plurality of second signal pins (21), an elastic spring force exerted on the second signal pins by the first signal pins provides a coupling between the respective first signal pins (11) and second signal pins (21).

## Patentansprüche

1. Vorrichtung, umfassend:
ein fahrzeugmontierbares elektronisches Produkt, das ein Elektronikproduktgehäuse (30) umfasst, das einen ersten Anschluss eines Verbinders aufweist, wobei der erste Anschluss eine primäre Gehäusehülle (10) umfasst, die eine Vielzahl von ersten Signalstiften (11) aufweist, die in der primären Gehäusehülle (10) installiert sind; und
ein Befestigungsteil zum ortsfesten Montieren des fahrzeugmontierten elektronischen Produkts in einem Fahrzeug, wobei das Befestigungsteil ein Teilgehäuse (40) umfasst, das einen zweiten Anschluss (20) des Verbinders aufweist, wobei der zweite Anschluss eine sekundäre Gehäusehülle (20) umfasst, die eine Vielzahl von zweiten Signalstiften (21) aufweist, die in der sekundären Gehäusehülle (20) installiert sind, und der zweite Anschluss dafür eingerichtet ist, mit dem ersten Anschluss zusammenzupassen,
wobei der Verbinder für die elektrische Signalübertragung zwischen dem fahrzeugmontierbaren elektronischen Produkt und dem Befestigungsteil vorgesehen ist, während sich das Fahrzeug bewegt;
**dadurch gekennzeichnet, dass** der Verbinder ein magnetischer Verbinder ist, wobei die primäre Gehäusehülle (10) des ersten Anschlusses eine Vielzahl von Magneten (12) umfasst und die sekundäre Gehäusehülle (20) des zweiten Anschlusses eine Vielzahl von Magneten (22) umfasst, wobei die Vielzahl von Magneten (12) des ersten Anschlusses und die Vielzahl von Magneten (22) des zweiten Anschlusses derart angeordnet sind, dass, während der Benutzung, wenn der zweite Anschluss mit dem ersten Anschluss zur elektrischen Signalübertragung verbunden ist, die zweiten und ersten Anschlüsse durch die Vielzahl von Magneten (22) zusammengehalten werden; und
dass der zweite Anschluss (20) schwimmend an dem Teilgehäuse (40) montiert ist, so dass während der Benutzung der zweite Anschluss (20) einer Bewegung des ersten Anschlusses folgt.

2. Vorrichtung gemäß Anspruch 1, bei der die Vielzahl von zweiten Signalstiften (21) an der sekundären Gehäusehülle (20) derart befestigt sind, dass ihre Stiftköpfe während der Benutzung auf eine korrespondierende Vielzahl von ersten Signalstiften (11) des ersten Anschlusses weisen, und
wobei die rückwärtigen Enden der zweiten Signalstifte (21) mit Signaldrähten verbunden sind, die innerhalb des Befestigungsteils installiert sind.

3. Vorrichtung gemäß Anspruch 1 oder 2, bei der das Teilgehäuse (40) umfasst:
eine querbefestigte Stange (41) zur Installation zwischen der Kopfstütze und Rückenlehne eines Autositzes;
eine Längserweiterungsstange (42), die mit der Mitte der querbefestigten Stange (41) verbunden ist;
und
eine Befestigungsbasis (43), die mit einem Ende der Längserweiterungsstange (42) verbunden ist,
wobei ein Verbindungsblock (44) auf der Befestigungsbasis (43) bereitgestellt ist und der zweite Anschluss (20) auf dem Verbindungsblock (44) montiert ist.

4. Vorrichtung gemäß Anspruch 3, bei der das Befestigungsteil weiterhin einen Tact-Schalter (45) umfasst, der auf der Befestigungsbasis (43) bereitgestellt ist, und dafür eingerichtet ist, zu bewirken, dass der Verbindungsblock (44) von der Befestigungsbasis (43) hervorsteht.

5. Vorrichtung gemäß einem der vorhergehenden Ansprüche, bei der das Befestigungsteil zwischen der Kopfstütze und einer Rückenlehne eines Autositzes befestigt ist.

6. Vorrichtung gemäß einem der vorhergehenden Ansprüche, bei der die Verbinderanschlüsse derart eingerichtet sind, dass, wenn die Vielzahl von ersten Signalstiften (11) elektrischen Kontakt mit der Vielzahl von zweiten Signalstiften (21) haben, eine elastische Federkraft, die von den ersten Signalstiften auf die zweiten Signalstifte ausgeübt ist, eine Kopplung zwischen den jeweiligen ersten Signalstiften (11) und zweiten Signalstiften (21) bereitstellt.

## Revendications

1. Appareil comprenant :
un produit électronique montable sur véhicule comprenant un corps de produit électronique (30) ayant un premier port de connecteur, le premier port comprenant une coque de corps primaire (10) ayant une pluralité de première broches de signal (11) installées dans la coque de corps primaire (10) ; et
un support de montage pour monter le produit électronique monté sur véhicule en place dans un véhicule, le support de montage comprenant un corps de support (40) ayant un second port (20) du connecteur, le second port comprenant une coque de corps secondaire (20) ayant une pluralité de secondes broches de signal (21) installées dans la coque de corps secondaire (20) et le second port étant configuré pour s'ajuster sur le premier port,
dans lequel le connecteur est destiné à une transmission de signal électrique entre le produit électronique montable sur véhicule et le support de montage tandis que le véhicule se déplace ;
**caractérisé en ce que** le connecteur est un connecteur magnétique, dans lequel la coque de corps primaire (10) du premier port comprend une pluralité d'aimants (12) et la coque de corps secondaire (20) du second port comprend une pluralité d'aimants (22), la pluralité d'aimants (12) du premier port et la pluralité d'aimants (22) du second port étant aménagés de sorte que, en service, lorsque le second port est connecté au premier port pour la transmission d'un signal électrique, les second et premier ports soient maintenus ensemble par la pluralité d'aimants (22) ; et
**en ce que** le second port (20) est monté flottant sur le corps de support (40) de sorte que, en service, le second port (20) suive le mouvement du premier port.

2. Appareil selon la revendication 1, dans lequel la pluralité de secondes broches de signal (21) sont fixées à la coque de corps secondaire (20) de sorte que leurs têtes de broches pointent, en service, sur une pluralité correspondante de premières broches de signal (11) du premier port, et
dans lequel les extrémités de queue des secondes broches de signal (21) sont connectées à des câbles de signal installés à l'intérieur du support de montage.

3. Appareil selon la revendication 1 ou la revendication 2, dans lequel le corps de support (40) comprend :
une tige transversale fixe (41) pour une installation entre l'appuie-tête et le dossier d'un siège de véhicule ;
une tige d'expansion longitudinale (42) raccordée au centre de la tige transversale fixe (41) ; et
une base de montage (43) raccordée à une extrémité de la tige d'expansion longitudinale (42) ;
dans lequel un bloc de connexion (44) est prévu sur la base de montage (43) et le second port (20) est monté sur le bloc de connexion (44).

4. Appareil selon la revendication 3, dans lequel le support de montage comprend en outre un commutateur tactile (45) monté sur la base de montage (43) aménagée pour amener le bloc de connexion (44) à faire saillie de la base de montage (43).

5. Appareil selon l'une quelconque des revendications précédentes, dans lequel le support de montage est fixe entre l'appuie-tête et le dossier d'un siège de véhicule.

6. Appareil selon l'une quelconque des revendications précédentes, dans lequel les ports de connecteur sont configurés de sorte que, lorsque la pluralité de premières broches de signal (11) ont un contact électrique avec la pluralité de secondes broches de signal (21), une force de ressort élastique exercée sur les secondes broches de signal par les première broches de signal fournisse un couplage entre les premières broches de signal (11) et les secondes broches de signal (21) respectives.
